# FASCICULE DE BREVET EUROPEEN

(11) **EP 3 987 986 B1**
(45) Date de publication et mention de la délivrance du brevet: **12.07.2023**
(21) Numéro de dépôt: 21203635.4
(22) Date de dépôt: 20.10.2021
(51) Int. Cl.: A47J 27/00, A47J 37/06

(54) **DISPOSITIF DE CUISSON**
KOCHVORRICHTUNG
COOKING DEVICE

(30) Priorité: 20.10.2020 FR 2010737
(43) Date de publication de la demande: 27.04.2022
(73) Titulaire: Roux, Nolwenn, 98000 Monaco (MC)
(72) Inventeur: Roux, Nolwenn, 98000 Monaco (MC)
(74) Mandataire: Nicolle, Olivier

(56) Documents cités:
- EP-A1- 0 054 160
- EP-A1- 0 139 885
- EP-A1- 3 449 786
- CN-A- 101 489 399
- US-A- 3 681 568

## Description

La présente invention concerne un dispositif de cuisson.

Elle trouve une application générale dans la cuisson d'aliments, et plus particulièrement pour la cuisson d'aliments dans le cadre d'une fondue ou analogue.

D'une manière générale, on connait des dispositifs de cuisson de type appareil à fondue comprenant des moyens de chauffage intégrés au-dessus d'éléments de conduction thermique; le document EP3449786A divulgue un dispositif comprenant les caractéristiques du préambule de la revendication 1.

Ces dispositifs de cuissons ne permettent en général aucune portabilité puisqu'ils nécessitent une source d'alimentation de type secteur.

Ils nécessitent généralement que les moyens de chauffage restent actifs pour maintenir la température de cuisson à une valeur choisie.

De tels dispositifs sont en général encombrants et difficilement déplaçables par l'utilisateur, de manière à pouvoir être disposé librement sur une surface de service qui n'est pas à proximité d'une prise secteur.

L'invention remédie à ces inconvénients et améliore la situation.

Elle porte sur un dispositif de cuisson comprenant :
- une première couche inférieure de chauffage comprenant des moyens de chauffage, aptes à initier le chauffage ; et
- une seconde couche intermédiaire comprenant des moyens de transfert thermique, aptes à être chauffés et transférer l'énergie thermique générée par les moyens de chauffage vers au moins un accessoire de cuisson.

Selon une définition générale de l'invention, le dispositif de cuisson comprend en outre une troisième couche supérieure comportant des moyens d'accumulation thermique recouvrant au moins partiellement la couche intermédiaire, et aptes à accumuler l'énergie thermique transmise par les moyens de transfert thermique tout en isolant thermiquement lesdits moyens de transfert thermique, lesdits moyens d'accumulation thermique comprenant une cavité configurée pour accueillir au moins un accessoire de cuisson, et en ce que les moyens de transfert thermique disposent d'au moins une cavité configurée pour accueillir complémentairement les moyens d'accumulation thermique sur la face supérieure les moyens de transfert thermique, et en ce que les couches intermédiaire et supérieure sont assemblées solidairement formant plateau amovible vis-à-vis de la première couche inférieure de chauffage.

Avantageusement, une telle structure permet de chauffer les moyens d'accumulation thermique jusqu'à une température choisie, et de séparer ledit plateau des moyens de chauffage afin de permettre une utilisation prolongée en cuisson, sans nécessité d'alimentation électrique.

De manière surprenante, les moyens d'accumulation thermique peuvent alors transférer progressivement l'énergie thermique accumulée vers l'accessoire de cuisson sans moyens de chauffage actifs, et ainsi disposer d'un dispositif de cuisson portable, sans fil, et thermiquement optimisé.

En pratique, les moyens d'accumulation thermique sont en matériau réfractaire, appartenant à la famille des céramiques.

Selon un mode de réalisation de l'invention, les moyens de transfert thermique disposent d'une surface plane comprenant une cavité ménagée centralement, apte à recevoir les moyens d'accumulation thermique, ainsi qu'une bande de protection isolante recouvrant latéralement le périmètre desdits moyens de transfert thermique de la couche intermédiaire.

En pratique, les moyens de transfert thermique comprennent au moins une cavité auxiliaire configurée pour accueillir un réservoir amovible.

Le dispositif de cuisson selon l'invention comprend en outre un couvercle amovible configuré pour recouvrir au moins partiellement les moyens d'accumulation thermique et l'accessoire de cuisson inséré, et configuré pour permettre un contact minimal avec les moyens d'accumulation thermique de la couche intermédiaire.

En pratique, le couvercle amovible comprend un évidement disposé centralement sur sa face supérieure, ledit évidement du couvercle comprenant des découpes aptes à recevoir et maintenir la position d'au moins un accessoire de service.

Selon un mode de réalisation conforme à l'invention le dispositif de cuisson comprend une source d'alimentation électrique apte à alimenter électriquement les moyens de chauffage appartenant au groupe formé par prise secteur, batterie.

En pratique, le dispositif de cuisson comprend des moyens d'activation et désactivation de l'alimentation électrique vers les moyens de chauffage.

A titre d'exemple, les moyens d'activation et désactivation de l'alimentation électrique vers les moyens de chauffage appartiennent au groupe formé par type manuel, type automatique.

Selon un mode de réalisation particulier conforme à l'invention, les moyens d'activation et désactivation automatiques de l'alimentation électrique comprennent un module de contrôle disposant de paramètres de chauffage prédéfinis.

Le dispositif de cuisson permet donc la cuisson d'aliments sans source d'alimentation secteur, ni contraintes de disposition particulière par rapport à ladite source, tout en permettant une utilisation sécuritaire, efficiente et ergonomique pour l'utilisateur.

D'autres caractéristiques et avantages de l'invention apparaîtront à la lumière de la description détaillée ci-après et des dessins dans lesquels :
la [**fig. 1****]** décrit schématiquement le dispositif de cuisson monté conforme à l'invention ;
la [**fig. 2****]** décrit schématiquement le dispositif de cuisson démonté selon l'invention ;
la [**fig. 3****]** décrit schématiquement les deux positions de fonctionnement du dispositif de cuisson selon l'invention ;
la [**fig. 4****]** représente schématiquement une vue éclatée du dispositif de cuisson selon l'invention ; et
la [**fig. 5****]** décrit schématiquement une couche verticale d'un mode de réalisation du dispositif de cuisson selon l'invention, mettant en avant les différentes couches fonctionnelles dudit dispositif de cuisson.

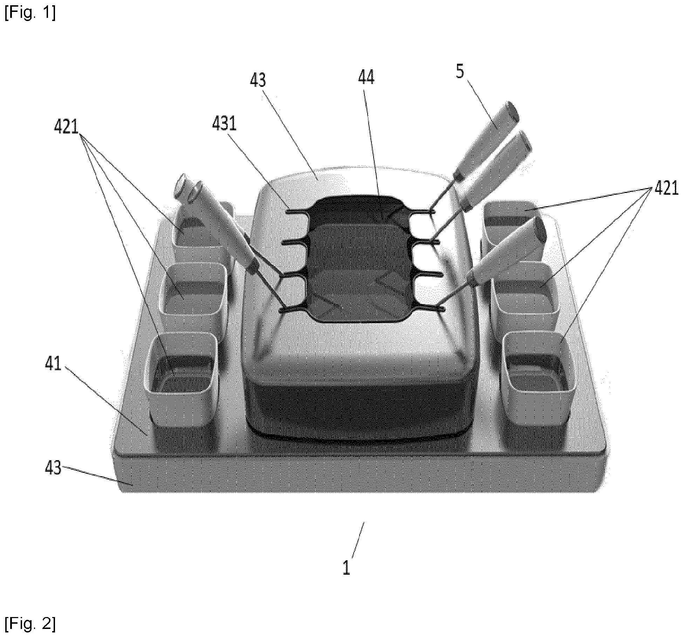

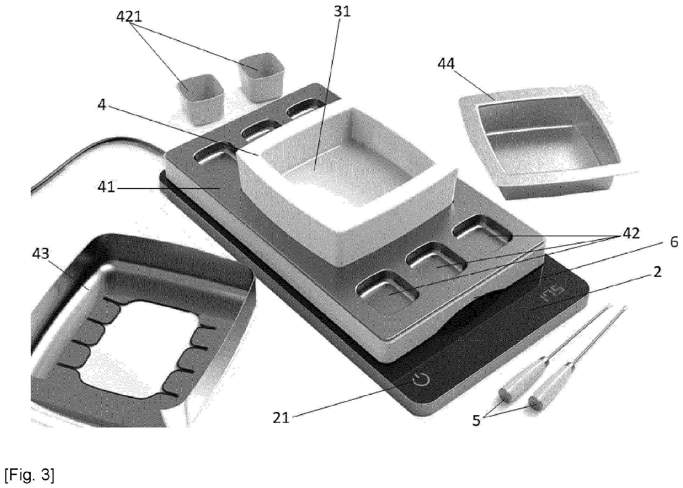

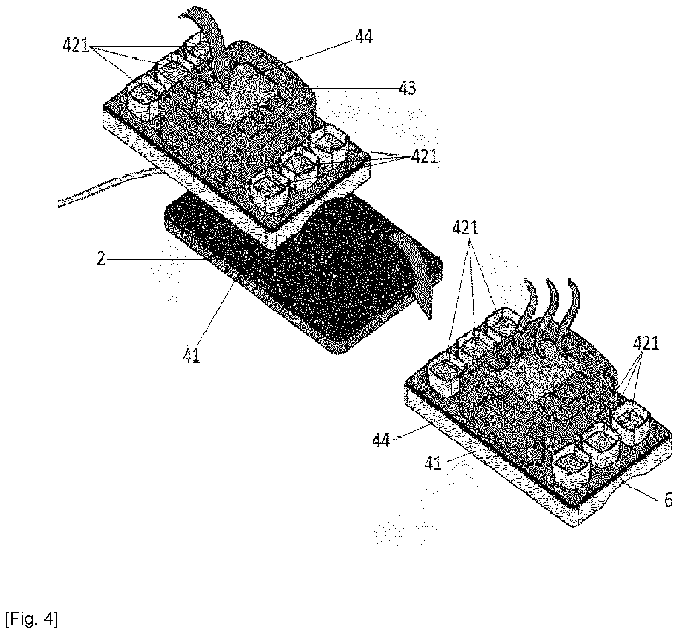

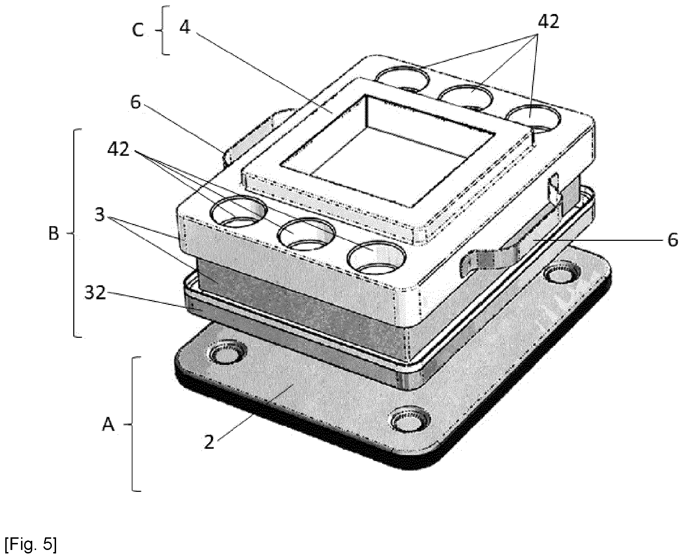

En référence aux **figures 1 à 4****,** le dispositif de cuisson 1 comprend une première couche inférieure A de chauffage comprenant des moyens de chauffage 2, aptes à initier le chauffage, une seconde couche intermédiaire B comprenant des moyens de transfert thermique 3, aptes à être chauffés et transférer l'énergie thermique générée par les moyens de chauffage 2, ainsi qu'une troisième couche supérieure C comportant des moyens d'accumulation thermique 4 recouvrant au moins partiellement la couche intermédiaire, et aptes à accumuler l'énergie thermique transmise par les moyens de transfert thermique 3 tout en isolant thermiquement lesdits moyens de transfert thermique 3, et ainsi chauffer un accessoire de cuisson 44.

Selon un premier mode de réalisation, la première couche inférieure A de chauffage comprend des moyens de chauffage 2 disposant d'un système à induction apte à initier magnétiquement le chauffage de la seconde couche intermédiaire B comprenant les moyens de transfert thermique magnétiques 3.

Selon un second mode de réalisation de l'invention, les moyens de chauffage 2 comprennent une plaque à induction intégrant au moins une bobine d'induction, lesdits moyens de chauffage 2 étant disposés au contact des moyens d'accumulation thermique 4, la base des moyens d'accumulation thermique 4 jouant le rôle de moyens de transfert thermique 3, et sont aptes à chauffer directement les moyens d'accumulation thermique 4 jusqu'à la température choisie.

Selon un troisième mode de réalisation alternatif de l'invention, les moyens de chauffage 2 comprennent au moins une résistance thermique électrique.

Les moyens de chauffage 2 sont aptes à faire passer les moyens d'accumulation thermique 4 d'un premier état dit froid dans lequel la température des moyens d'accumulation thermique est la température ambiante, à un second état dit état de cuisson dans lequel la température des moyens d'accumulation thermique est la température de cuisson choisie par l'utilisateur.

Les moyens de chauffage 2 disposent en outre d'une source d'alimentation électrique apte à alimenter électriquement les moyens de chauffage 2.

A titre d'exemple, la source d'alimentation électrique appartient au groupe formé par prise secteur, batterie, prise secteur en combinaison avec une batterie.

Les moyens de chauffage 2 disposent des moyens d'activation et désactivation 21 de l'alimentation électrique.

Selon un premier mode de réalisation conforme à l'invention, les moyens d'activation et désactivation 21 sont de type manuel.

Selon un second mode de réalisation conforme à l'invention, les moyens d'activation et désactivation 21 sont de type automatique.

En pratique, les moyens d'activation et désactivation 21 de l'alimentation électrique automatiques comprennent un module de contrôle disposant de paramètres de chauffage prédéfinis aptes à effectuer un chauffage selon une température et une durée choisie.

Le dispositif de cuisson 1 selon l'invention comprend en outre une seconde couche dite couche intermédiaire B comportant des moyens de transferts thermiques 3 ainsi qu'une troisième couche dite couche supérieure C comprenant des moyens d'accumulation thermique 4 respectivement.

Les couches intermédiaire B et supérieure C sont assemblées solidairement, formant plateau amovible par rapport à la couche inférieure A de chauffage.

En pratique, les moyens de transfert thermique 3 sont aptes à convertir le champ magnétique induit par au moins une bobine d'induction des moyens de chauffage 2, en énergie thermique, et apte à transférer l'énergie thermique ainsi générée aux moyens d'accumulation thermique 4.

A titre d'exemple non limitatif, les moyens de transfert thermique 3 sont composés en matériau ferromagnétique appartenant au groupe formé par inox ferromagnétique, acier, fonte ou analogue.

Selon un mode particulier de l'invention, la couche intermédiaire B comprenant les moyens de transfert thermiques 3 permet la distribution de la chaleur produite par les moyens de chauffages 2 sous-jacents.

A titre d'exemple non limitatif de l'invention, les moyens de transfert thermique 3 sont en aluminium avec une densité de 2700 kg / m3, rendant ce qui rend l'aluminium beaucoup plus léger que de nombreux autres matériaux disposant de propriétés ferromagnétiques tout en conservant une conductivité thermique satisfaisante.

Les moyens de transfert thermique 3 disposent d'une surface plane comprenant une cavité ménagée centralement, apte à recevoir les moyens d'accumulation thermique 4.

Les moyens de transfert thermique 3 disposent ensuite d'une bande de protection isolante 32 recouvrant latéralement son périmètre, permettant ainsi de protéger l'utilisateur d'une potentielle brûlure lors de la manipulation du dispositif 1.

La bande de protection isolante 32 comprend en outre au moins deux évidements, chaque évidement étant disposés parallèlement par rapport à l'autre, et chaque évidement formant poignée 6, apte à permettre la manipulation par l'utilisateur.

Ils comprennent en outre au moins une cavité auxiliaire 42 pour réservoir amovible 421, disposés autour de la cavité ménagée apte à recevoir les moyens d'accumulation thermique 4, ledit ou lesdits réservoirs amovibles 421 étant aptes à recevoir par exemple des sauces.

Les moyens d'accumulation thermique 4 selon l'invention comprennent une structure de type cuve comprenant une cavité ménagée centralement apte à recevoir un accessoire de cuisson 44.

A titre d'exemple, l'accessoire de cuisson 44 est constitué d'une cuve en pentoxyde de titane, sa composition permettant une conduction thermique élevée, adaptée pour que le transfert thermique lors de la cuisson dispose de pertes thermiques limitées.

Les moyens d'accumulation thermique 4 sont insérés dans la cavité ménagée centralement des moyens de transfert thermique 3, et recouvrent au moins partiellement les moyens de transfert thermique 3. Ils sont en outre aptes à accumuler l'énergie thermique transmise par les moyens de transfert thermique 3 tout en isolant thermiquement lesdits moyens de transfert thermique 3.

Selon un mode de réalisation conforme à l'invention, les moyens d'accumulation thermique 4 sont composés d'au moins un type de matériau réfractaire, possédant une forte inertie thermique.

Exposés à une source de chaleur, ils chauffent relativement lentement, et une fois à température élevée, refroidissent lentement, permettant ainsi d'obtenir un dispositif de cuisson 1 chauffé et non dépendant d'une source d'alimentation électrique, apte à garantir le chauffage d'un accessoire de cuisson 44.

A titre d'exemple les moyens d'accumulation thermique 4 sont composés d'un matériau réfractaire, appartenant à la famille des céramiques.

Le dispositif de cuisson 1 selon l'invention comprend en outre un couvercle 43 amovible configuré pour recouvrir au moins partiellement les moyens d'accumulation thermique 4 et l'accessoire de cuisson 44 inséré, et configuré pour permettre un contact minimal avec les moyens d'accumulation thermique 4. Ceci permet au couvercle 43 de rester froid et ainsi éviter tout contact accidentel de l'utilisateur avec les moyens d'accumulation thermique 4 qui sont à température élevée en état de cuisson.

Le couvercle 43 comprend en outre un évidement disposé centralement sur sa face supérieure permettant l'accès à la zone de cuisson définie par l'accessoire de cuisson 44.

Selon un mode de réalisation particulier, l'évidement du couvercle 43 comprend des découpes 431 aptes à recevoir et maintenir au moins un accessoire de service 5.

Les accessoires de service 5 appartiennent au groupe formé par fourchette à viande, pique de cuisson.

Selon un mode de réalisation particulier de l'invention, les découpes 431 du couvercle 43 comprennent un surface interne apte à accueillir les accessoires de service 5, ladite surface interne étant recouverte d'un matériau souple, apte à être déformé lors de l'insertion de l'accessoire de service 5.

La déformation induite par l'insertion de l'accessoire de service 5 permet sa compression, ainsi que le verrouillage dudit accessoire de service 5 dans une position choisie.

A titre d'exemple, la surface interne des découpes 431 est recouverte de silicone.

Selon un premier mode de réalisation en utilisation, les moyens de chauffage 2 sont alimentés par une source d'alimentation électrique de type secteur pendant une durée choisie, permettant ainsi le passage de l'état froid à un état de cuisson du dispositif 1, par chauffage des moyens d'accumulation thermique 4 via les moyens de transfert thermique 3 jusqu'à une température choisie, puis le dispositif 1 est débranché, le plateau ainsi formé est séparé des moyens de chauffage 2, et le dispositif 1 est utilisé pour la cuisson.

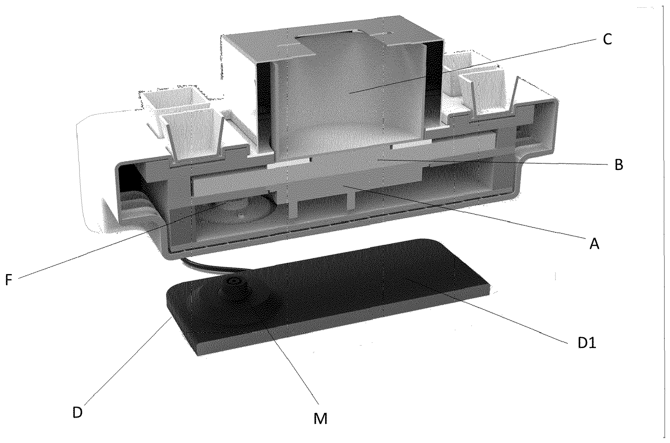

En référence à la figure 5, selon un mode de réalisation particulier de l'invention, la source d'alimentation électrique comprend une couche D, comprenant une surface plane D1 apte à recevoir sur sa face supérieure la couche inférieure A de chauffage comprenant des moyens de chauffage 2 et ainsi former un socle pour le dispositif de cuisson, ainsi qu'un câble électrique de type secteur apte à être branché à une prise d'alimentation.

La source d'alimentation électrique formant une couche D formant socle amovible , comprend en outre un élément de contact faisant saillit vers le haut, formant partie mâle M, configuré pour être inséré dans une dépression disposée sur la face inférieure de la couche inférieure A, formant partie femelle F, les parties mâle et femelle comprenant chacun un contact électrique, les contacts électriques étant mis en contact lors de l'assemblage de la partie mâle M et la partie femelle F, et configurée pour permettre l'alimentation électrique du dispositif de cuisson lors de la pose du dispositif sur la couche D formant socle amovible, et l'arrêt de celle-ci lors du retrait du dispositif de la couche D formant socle amovible.

Selon un second mode de réalisation, les moyens de chauffage 2 sont alimentés par une source d'alimentation électrique de type secteur pendant une durée choisie, permettant ainsi le passage de l'état froid à un état de cuisson du dispositif 1, jusqu'à une température choisie, puis le dispositif 1 est débranché. Le plateau ainsi formé est séparé des moyens de chauffage 2, et le dispositif 1 est utilisé pour la cuisson une source l'alimentation auxiliaire de type batterie apte à activer les moyens de chauffage 2 lorsque la température des moyens d'accumulation thermique 4 descend au-dessous d'une certaine température est activée alternativement.

Selon un mode de réalisation particulier de l'invention, les composants internes sont isolés avec une feuille isolante en fibre superwool 607 ignifuge afin de les protéger des possibles dégradations occasionnées par le chauffage des éléments du dispositif de cuisson selon l'invention.

## Revendications

1. Dispositif de cuisson (1) comprenant :
- une première couche inférieure (A) de chauffage comprenant des moyens de chauffage (2), aptes à initier le chauffage; et
- une seconde couche intermédiaire (B) comprenant des moyens de transfert thermique (3), aptes à être chauffés et transférer l'énergie thermique générée par les moyens de chauffage (2) vers au moins un accessoire de cuisson (44), **caractérisé en ce que** qu'il comprend en outre une troisième couche supérieure (C) comportant des moyens d'accumulation thermique (4) recouvrant au moins partiellement la couche intermédiaire, et aptes à accumuler l'énergie thermique transmise par les moyens de transfert thermique (3) tout en isolant thermiquement lesdits moyens de transfert thermique (3), lesdits moyens d'accumulation thermique (4) comprenant une cavité configurée pour accueillir au moins un accessoire de cuisson (44), et **en ce que** les moyens de transfert thermique (3) disposent d'au moins une cavité (31) configurée pour accueillir complémentairement les moyens d'accumulation thermique (4) sur la face supérieure des moyens de transfert thermique (3), et **en ce que** les couches intermédiaire (B) et supérieure (C) sont assemblées solidairement formant plateau amovible vis-à-vis de la première couche inférieure (A) de chauffage.

2. Dispositif de cuisson (1) selon la revendication 1, **caractérisé en ce que** les moyens d'accumulation thermique (4) sont en matériau réfractaire, appartenant à la famille des céramiques.

3. Dispositif de cuisson (1) selon l'une des revendications 1 ou 2, **caractérisé en ce que** les moyens de transfert thermique (3) disposent d'une surface plane comprenant une cavité ménagée centralement, apte à recevoir les moyens d'accumulation thermique (4), ainsi qu'une bande de protection isolante (32) recouvrant latéralement le périmètre desdits moyens de transfert thermique (3) de la couche intermédiaire (B).

4. Dispositif de cuisson (1) selon l'une des revendications 1 à 3, **caractérisé en ce que** les moyens de transfert thermique (3) comprennent en outre au moins une cavité auxiliaire (42) pour réservoir amovible (421).

5. Dispositif de cuisson (1) l'une des revendications 1 à 4, **caractérisé en ce qu'**il comprend en outre un couvercle (43) amovible configuré pour recouvrir au moins partiellement les moyens d'accumulation thermique (4) et l'accessoire de cuisson (44) inséré, et configuré pour permettre un contact minimal avec les moyens d'accumulation thermique (4) de la couche intermédiaire (B).

6. Dispositif de cuisson (1) selon la revendication 5, **caractérisé en ce que** le couvercle amovible (43) comprend un évidement disposé centralement sur sa face supérieure, ledit évidement du couvercle (43) comprenant des découpes (431) aptes à recevoir et maintenir la position d'au moins un accessoire de service (5).

7. Dispositif de cuisson (1) selon l'une des revendications 1 à 6, **caractérisé en ce que** le dispositif de cuisson (1) comprend une source d'alimentation électrique apte à alimenter électriquement les moyens de chauffage (2) appartenant au groupe formé par prise secteur, batterie.

8. Dispositif de cuisson (1) selon l'une des revendications 1 à 7, **caractérisé en ce que** le dispositif de cuisson (1) comprend des moyens d'activation et désactivation de l'alimentation électrique vers les moyens de chauffage (2).

9. Dispositif de cuisson (1) la revendication 8, **caractérisé en ce que** les moyens d'activation et désactivation de l'alimentation électrique vers les moyens de chauffage (2) appartiennent au groupe formé par type manuel, type automatique.

10. Dispositif de cuisson (1) l'une des revendications 8 ou 9, **caractérisé en ce que** les moyens d'activation et désactivation de l'alimentation électrique automatiques comprennent un module de contrôle disposant de paramètres de chauffage prédéfinis. 1

## Patentansprüche

1. Kochvorrichtung (1), die folgendes umfasst:
- eine erste untere Heizschicht (A) mit Heizmitteln (2), die geeignet sind, den Heizvorgang einzuleiten; und
- eine zweite Zwischenschicht (B) mit beheizbaren Wärmeträgern (3), welche die von den Heizmitteln (2) erzeugte Wärmeenergie auf mindestens ein Kochzubehör (44) übertragen können, **dadurch gekennzeichnet, dass** sie außerdem eine dritte obere Schicht (C) mit Wärmespeichermitteln (4) umfasst, die die Zwischenschicht zumindest teilweise bedecken, die von den Wärmeträgern (3) übertragene Wärmeenergie speichern und gleichzeitig die Wärmeträger (3) thermisch isolieren können, wobei die Wärmespeichermittel (4) einen Hohlraum umfassen, der so gestaltet ist, dass er mindestens ein Kochzubehör (44) aufnehmen kann, und **dadurch gekennzeichnet, dass** die Wärmeträger (3) über mindestens einen Hohlraum (31) verfügen, der so gestaltet ist, dass die Wärmespeichermittel (4) an der Oberseite der Wärmeträger (3) komplementär aufgenommen werden können, und dadurch, dass die Zwischenschicht (B) und die obere Schicht (C) einstückig zusammengesetzt sind und gegenüber der ersten unteren Heizschicht (A) eine abnehmbare Platte bilden.

2. Kochvorrichtung (1) nach Anspruch 1, **dadurch gekennzeichnet, dass** die Wärmespeichermittel (4) aus feuerfestem Material bestehen, das zur Familie der Keramiken gehört.

3. Kochvorrichtung (1) nach einem der Ansprüche 1 oder 2, **dadurch gekennzeichnet, dass** die Wärmeträger (3) über eine ebene Oberfläche mit einem mittig angeordnetem Hohlraum zur Aufnahme der Wärmespeichermittel (4) verfügen, sowie einen isolierenden Schutzstreifen (32), der seitlich den Umfang der Wärmeträger (3) der Zwischenschicht (B) bedeckt.

4. Kochvorrichtung (1) nach einem der Ansprüche 1 bis 3, **dadurch gekennzeichnet, dass** die Wärmeträger (3) ferner mindestens einen zusätzlichen Hohlraum (42) für einen abnehmbaren Behälter (421) umfassen.

5. Kochvorrichtung (1) nach einem der Ansprüche 1 bis 4, **dadurch gekennzeichnet, dass** sie ferner einen abnehmbaren Deckel (43) umfasst, der so gestaltet ist, dass er die Wärmespeichermittel (4) und das eingesetzte Kochzubehör (44) zumindest teilweise abdeckt und einen minimalen Kontakt mit den Wärmespeichermitteln (4) der Zwischenschicht (B) ermöglicht.

6. Kochvorrichtung (1) nach Anspruch 5, **dadurch gekennzeichnet, dass** der abnehmbare Deckel (43) auf seiner Oberseite eine mittig angeordnete Aussparung umfasst, wobei die Aussparung des Deckels (43) Ausschnitte (431) umfasst, die mindestens ein Servierzubehör (5) aufnehmen und in Position halten können.

7. Kochvorrichtung (1) nach einem der Ansprüche 1 bis 6, **dadurch gekennzeichnet, dass** die Kochvorrichtung (1) eine Stromversorgungsquelle umfasst, die den Heizmitteln (2) Strom zuführen kann und zur Gruppe der Netzstecker und Batterien gehört.

8. Kochvorrichtung (1) nach einem der Ansprüche 1 bis 7, **dadurch gekennzeichnet, dass** die Kochvorrichtung (1) Mittel zum Ein- und Ausschalten der Stromversorgung der Heizmittel (2) umfasst.

9. Kochvorrichtung (1) nach Anspruch 8, **dadurch gekennzeichnet, dass** die Mittel zum Ein- und Ausschalten der Stromversorgung der Heizmittel (2) zur Gruppe der manuellen und automatischen Ein- und Ausschaltmittel gehören.

10. Kochvorrichtung (1) nach einem der Ansprüche 8 oder 9, **dadurch gekennzeichnet, dass** die Mittel zum automatischen Ein- und Ausschalten der Stromversorgung ein Steuermodul mit vordefinierten Heizparametern umfassen.

## Claims

1. A cooking device (1) comprising:
- a first lower heating layer (A) comprising heating means (2) capable of initiating heating; and
- a second intermediate layer (B) comprising heat transfer means (3), capable of being heated and of transferring the thermal energy generated by the heating means (2) to at least one cooking accessory (44), **characterised in that** it furthermore comprises a third upper layer (C) comprising heat storage means (4) at least partially covering the intermediate layer, and capable of storing the thermal energy transmitted by the heat transfer means (3) while thermally insulating said heat transfer means (3) said heat storage means (4) comprising a cavity configured to accommodate at least one cooking accessory (44), and **in that** the heat transfer means (3) have at least one cavity (31) configured to accommodate the heat storage means (4) complementarily on the upper face of the heat transfer means (3), and **in that** the intermediate (B) and upper (C) layers are assembled integrally to form a removable plate with respect to the first lower heating layer (A).

2. The cooking device (1) according to claim 1, **characterised in that** the heat storage means (4) are made of refractory material, belonging to the ceramic family.

3. The cooking device (1) according to one of claims 1 or 2, **characterised in that** the heat transfer means (3) have a flat surface comprising a centrally arranged cavity capable of receiving the heat storage means (4), as well as an insulating protective strip (32) laterally covering the perimeter of said heat transfer means (3) of the intermediate layer (B).

4. The cooking device (1) according to any of claims 1 to 3, **characterised in that** the heat transfer means (3) furthermore comprise at least one auxiliary cavity (42) for a removable tank (421).

5. The cooking device (1) of any of claims 1 to 4, **characterised in that** it furthermore comprises a removable lid (43) configured to at least partially cover the heat storage means (4) and the inserted cooking accessory (44), and configured to allow minimal contact with the heat storage means (4) of the intermediate layer (B).

6. The cooking device (1) according to claim 5, **characterised in that** the removable lid (43) comprises a recess centrally arranged on its upper face, said recess of the lid (43) comprising cut-outs (431) capable of receiving and maintaining the position of at least one serving accessory (5) .

7. The cooking device (1) according to any of claims 1 to 6, **characterised in that** the cooking device (1) comprises an electrical power source capable of electrically supplying the heating means (2) belonging to the group formed by mains socket, battery.

8. The cooking device (1) according to any of claims 1 to 7, **characterised in that** the cooking device (1) comprises means for activating and deactivating the electrical supply to the heating means (2).

9. The cooking device (1) of claim 8, **characterised in that** the means for activating and deactivating the electrical supply to the heating means (2) belong to the group formed by manual type, automatic type.

10. The cooking device (1) of either of claims 8 or 9, **characterised in that** the means for automatically activating and deactivating the electrical supply comprise a control module having predefined heating parameters.
